(19) Europäisches Patentamt
European Patent Office
Office européen des brevets

(11) **EP 4 449 213 B1**

(12) **EUROPÄISCHE PATENTSCHRIFT**

(45) Veröffentlichungstag und Bekanntmachung des Hinweises auf die Patenterteilung:
**10.12.2025 Patentblatt 2025/50**

(21) Anmeldenummer: **23707028.9**

(22) Anmeldetag: **20.02.2023**

(51) Internationale Patentklassifikation (IPC):
***G05B 19/416*** *(2006.01)*

(52) Gemeinsame Patentklassifikation (CPC):
**G05B 19/416;** G05B 2219/34175;
G05B 2219/43009; G05B 2219/43062;
G05B 2219/43203

(86) Internationale Anmeldenummer:
**PCT/EP2023/054172**

(87) Internationale Veröffentlichungsnummer:
**WO 2023/174637 (21.09.2023 Gazette 2023/38)**

(54) **GESCHWINDIGKEITSABHÄNGIGES ÜBERSCHLEIFEN ZWISCHEN SÄTZEN MIT UNSTETIGEN BAHNVERLÄUFEN**

SPEED DEPENDENT OVERGRINDING BETWEEN SETS WITH DISCONTINUOUS COURSES

PONÇAGE EN FONCTION DE LA VITESSE ENTRE ENSEMBLES À COURBES DE TRAJECTOIRE DISCONTINUES

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **18.03.2022 EP 22162987**

(43) Veröffentlichungstag der Anmeldung:
**23.10.2024 Patentblatt 2024/43**

(73) Patentinhaber: **Siemens Aktiengesellschaft**
**80333 München (DE)**

(72) Erfinder: **SPIELMANN, Ralf**
**70569 Stuttgart (DE)**

(74) Vertreter: **Siemens Patent Attorneys**
**Postfach 22 16 34**
**80506 München (DE)**

(56) Entgegenhaltungen:
EP-A1- 2 738 635     EP-A2- 0 917 033

- **ANONYMOUS: "Sinumerik ONE Basisfunktionen - Bahnsteuerbetrieb", SIEMENS INDUSTRY ONLINE SUPPORT - PRODUKT SUPPORT, 1 July 2021 (2021-07-01), pages 1 - 874, XP055955296, Retrieved from the Internet <URL:https://support.industry.siemens.com/cs/document/109801339/sinumerik-one-basisfunktionen?dti=0&lc=de-WW> [retrieved on 20220826]**
- **ANONYMOUS: "INTELLIGENTE LÖSUNGEN FÜR WERKZEUGMASCHINEN - Sinumerik (Ausgabe 2021)", SINUMERIK FAMILY BROCHURE DE, 1 January 2021 (2021-01-01), pages 1 - 36, XP055955751, Retrieved from the Internet <URL:https://www.volz-witten.de/maschinen/werkzeugmaschinen/cnc-steuerungen/siemens-sinumerik-one.html> [retrieved on 20220829]**
- **ZHAO HUAN ET AL: "A real-time look-ahead interpolation methodology with curvature-continuous B-spline transition scheme for CNC machining of short line segments", vol. 65, 1 February 2013 (2013-02-01), AMSTERDAM, NL, pages 88 - 98, XP055955579, ISSN: 0890-6955, Retrieved from the Internet <URL:https://www.sciencedirect.com/science/article/pii/S0890695512001885> [retrieved on 20220829], DOI: 10.1016/j.ijmachtools.2012.10.005**

**Beschreibung**

Die Erfindung betrifft ein Betriebsverfahren für eine Maschine, die eine Mehrzahl von lagegeregelten Achsen aufweist, die in ihrer Gesamtheit in Verbindung mit einer numerischen Steuereinrichtung eine Verfahrbewegung eines ersten Elements der Maschine relativ zu einem zweiten Element der Maschine bewirken, wobei die Verfahrbewegung anhand von Programmanweisungen vorgegeben wird, die eine Bahnkurve mit einer Vielzahl an aneinandergrenzenden Bahnabschnitten definieren, wobei die numerische Steuereinrichtung aus den Programmanweisungen in einem Interpolationstakt mit einer vorgegebenen ersten Periodendauer Lagesollwerte für die lagegeregelten Achsen ermittelt, wobei eine erste Programmanweisung einen ersten Bahnabschnitt und eine unmittelbar darauffolgende zweite Programmanweisung einen unmittelbar an den ersten Bahnabschnitt angrenzenden zweiten Bahnabschnitt definiert und wobei der erste und der zweite Bahnabschnitt in einem Berührpunkt nicht stetig differenzierbar ineinander übergehen.

Ferner betrifft die Erfindung ein Maschinensystem zur Durchführung eines derartigen Verfahrens.

Weiterhin betrifft die Erfindung eine numerische Steuereinrichtung, insbesondere eine CNC-Steuerung oder eine Bahnsteuerung, für ein derartiges Maschinensystem.

Aus der Druckschrift DE60012815T2 ist eine numerische Steuereinrichtung bekannt, bei der Takt-Daten individuell erzeugbar sind. Die numerische Steuereinrichtung erlaubt es, für eine erste Gruppe von mittels der numerischen Steuereinrichtung gesteuerten Achsen einen ersten Interpolationstakt und für eine zweite, von der ersten Gruppe verschiedene Gruppe von mittels der numerischen Steuereinrichtung gesteuerten Achsen einen zweiten, von dem ersten Interpolationstakt verschiedenen Interpolationstakt einzustellen.

Aus der Druckschrift EP 1424613 B1 ist ein Verfahren zum Bearbeiten von Werkstücken mittels eines mehrachsigen Handhabungsgeräts, wie eines Industrieroboters, mit einem nach Maßgabe durch eine Steuerungseinheit des Handhabungsgeräts bewegten Werkzeug bekannt, wobei das Werkzeug ein Laserbearbeitungswerkzeug sein kann, bei dem Spiegel mittels der Steuerungseinheit in einem Vielfachen eines Interpolationstakts angefahren werden.

Die Offenlegungsschrift EP 2738635 A1 offenbart eine numerische Steuervorrichtung, umfassend: ein lokales Pfadfilter, das ein Interpolationsintervall unter einem Werkzeugpfad lokal interpoliert, so dass eine Variation in einem Differenzialwert an dem Interpolationsobjektpunkt zu einer kontinuierlichen Variation wird, wobei das Interpolationsintervall eine spezifische Intervallbreite vor und nach einem Interpolationsobjektpunkt hat; und eine Impulsinterpolationseinheit, die, wenn ein spezieller Befehl, der eine Verzögerung oder Beschleunigung eines Transferobjekts anweist, in eine Befehlseingabevorrichtung eingegeben wird, eine Referenzzeit ableitet, die pro Referenzeinheitszeit fortschreitet, die um einen der Verzögerung entsprechenden Grad verkürzt oder verlängert wird.

Aus der Veröffentlichung "INTELLIGENTE LÖSUNGEN FÜR WERKZEUGMASCHINEN - Sinumerik (Ausgabe 2021)"; Sinumerik Family Brochure DE; pp.: 1-36; XP055955751; sind eine CNC-Steuerung sowie ein digitaler Zwilling der CNC-Steuerung bekannt, bei denen der digitale Zwilling der CNC-Steuerung integraler Bestandteil der CNC-Steuerung ist.

Aus dem Funktionshandbuch "SINUMERIK ONE Basisfunktionen", Siemens Industry Online Support - Produkt Support, 1. Juli 2021 (2021-07-01), Seiten 1-874, XP055955296, ist aus Kapitel 6.3 "Bahnsteuerbetrieb", Seiten 458 ff, insbesondere Kapitel 6.3.2 "Geschwindigkeitsabsenkung gemäß Überlastfaktor", Seiten 460 ff, ist ein Bahnsteuerbetrieb bekannt, bei dem ein Abbremsen der Bahnachsen auf die Geschwindigkeit Null am Satzwechselpunkt vermieden und mit möglichst gleicher Bahngeschwindigkeit in den nächsten Satz gewechselt wird.

Dabei bewirkt der Bahnsteuerbetrieb, dass "knickförmige" Satzübergänge durch lokale Änderungen des programmierten Verlaufs tangential gestaltet bzw. geglättet werden. Das Ausmaß der Änderung relativ zum programmierten Verlauf kann durch die Kriterien des Überlastfaktors oder Überschleifens eingegrenzt werden.

Die Funktion "Geschwindigkeitsabsenkung gemäß Überlastfaktor" senkt im Bahnsteuerbetrieb die Bahngeschwindigkeit so weit ab, dass unter Wahrung der Beschleunigungsgrenze und unter Berücksichtigung eines Überlastfaktors der nichttangentiale Satzübergang in einem Interpolatortakt (auch Interpolationstakt oder kurz: IPO-Takt) überfahren werden kann.

Mit der Geschwindigkeitsabsenkung werden bei nichttangentialem Konturverlauf am Satzübergang axiale, innerhalb eines IPO-Taktes ausführbare "Geschwindigkeitssprünge" erzeugt. Mit dem Geschwindigkeitssprung wird vermieden, dass die Bahngeschwindigkeit bei dem Satzübergang zu null abgesenkt werden muss. Der Sprung wird dann ausgeführt, wenn die axiale Geschwindigkeit mit der Achsbeschleunigung auf eine Geschwindigkeit reduziert wurde, ab der dann mit dem Sprung auf den neuen Sollwert gelangt werden kann. Die Sprunghöhe des Sollwerts kann mittels des Kriteriums "Überlastfaktor" begrenzt werden. Da die Sprunghöhe achsbezogen ist, wird am Satzübergang die kleinste Sprunghöhe der beim Satzwechsel aktiven Bahnachsen berücksichtigt. Da alle beteiligten Achsen unterschiedlich hoch springen können, ist das Kriterium die kleinste Sprunghöhe, sonst würde die kleinste Sprunghöhe einer Achse verletzt.

Nachteilig bei der zuletzt genannten Funktion ist, dass dabei die Bahngeschwindigkeit abnimmt, insbesondere dann, wenn der Bahnverlauf durch ein Teileprogramm mit vielen Satzübergängen mit nichttangentialem, d.h. nicht stetig differenzierbarem Konturverlauf bestimmt wird.

Eine Aufgabe der Erfindung ist es daher, ein Betriebsverfahren für eine Maschine anzugeben, bei dem auch bei einem Bahnverlauf, der durch ein Teileprogramm mit vielen Satzübergängen mit nichttangentialem Konturverlauf bestimmt wird, eine hohe Bahngeschwindigkeit und damit einhergehend eine kurze Bearbeitungszeit erreicht werden.

Die Erfindung sieht zur Lösung dieser Aufgabe vor, dass bei einem Betriebsverfahren der eingangs genannten Art für wenigstens eine erste lagegeregelte Achse eine von der ersten Periodendauer verschiedene Beschleunigungsdauer vorgebbar ist, wobei für die erste lagegeregelte Achse eine Übergangs-Maximalbeschleunigung vorgebbar ist, wobei für die erste lagegeregelte Achse eine Übergangs-Maximalgeschwindigkeit ermittelt wird, derart, dass bei einer Bewegung der ersten lagegeregelten Achse mit der Übergangs-Maximalgeschwindigkeit unter Anwendung der Übergangs-Maximalbeschleunigung die Geschwindigkeit der ersten lagegeregelten Achse am Ende der Beschleunigungsdauer den Wert Null aufweist, und wobei die Verfahrbewegung derart ermittelt wird, dass die Geschwindigkeit der ersten lagegeregelten Achse beim Übergang von dem ersten Bahnabschnitt zu dem zweiten Bahnabschnitt die Übergangs-Maximalgeschwindigkeit nicht übersteigt, wobei bei der numerischen Steuereinrichtung (3) ein von dem Interpolationstakt verschiedener Technologietakt mit einer zweiten Periodendauer (TD1, TD2, TD3) vorgegeben wird und wobei die zweite Periodendauer (TD1, TD2, TD3) als Beschleunigungsdauer eingestellt wird.

Die Erfindung bietet den Vorteil, dass damit bei Satzübergängen, die einen unstetigen Bahnverlauf zur Folge haben und damit zu deren Realisierung mit einer bestimmten, von Null verschiedenen Bahngeschwindigkeit "Geschwindigkeitssprünge" einzelner Achsen erforderlich wären, die Beschleunigungsdauer unabhängig vom IPO-Takt vorgegeben werden kann. Der Anwender ist damit nicht länger auf die Periodendauer genau eines IPO-Taktes beschränkt.

Insbesondere bei einem kurzen IPO-Takt (z.B. 2 ms und darunter) bewirkt dies, dass die Achsgeschwindigkeiten einzelner Achsen bei Satzübergängen nicht länger auf sehr niedrige Achsgeschwindigkeiten abgebremst werden müssen, damit innerhalb dieses kurzen IPO-Taktes die Achse auf v = 0 gebremst werden kann.

Die Erfindung sieht vor, dass bei der numerischen Steuereinrichtung ein von dem Interpolationstakt verschiedener Technologietakt mit einer zweiten Periodendauer vorgegeben wird, wobei die zweite Periodendauer als Beschleunigungsdauer eingestellt wird.

Dies bietet den Vorteil, dass über einen derart definierten, von dem IPO-Takt verschiedenen Technologietakt auch andere Funktionen eingestellt werden können, insbesondere solche Funktionen, bei denen ein sehr kurzer IPO-Takt zur Taktung der jeweiligen Funktion nicht sinnvoll ist. Ein Beispiel dafür wäre die Erfassung der Temperatur für eine an sich bekannte Temperaturkompensation.

Eine Ausführungsform der Erfindung sieht vor, dass die zweite Periodendauer ein ganzzahliges Vielfaches der ersten Periodendauer beträgt. Ein nicht völlig von dem IPO-Takt losgelöster Technologietakt bietet technische Vorteile, sowohl bei der Realisierung als auch bei der Synchronisation unterschiedlicher Vorgänge bzw. Funktionen in der numerischen Steuereinrichtung.

Eine Ausführungsform der Erfindung sieht vor, dass die Taktflanken des Technologietakts auf Taktflanken des Interpolationstakts liegen.

Diese Ausführungsform bietet den Vorteil, dass der Technologietakt damit besonders gut an den IPO-Takt angepasst ist und die beiden Takte damit besonders gut synchronisierbar sind.

Eine Ausführungsform der Erfindung sieht vor, dass die erste Periodendauer 5 ms nicht übersteigt und insbesondere im Bereich von 1 ms bis 3 ms liegt.

Die Vorteile der Erfindung kommen insbesondere bei sehr kurzen IPO-Takten mit einer Periodendauer unterhalb von 5 ms, typischerweise 1 ms bis 3 ms, zum Tragen.

Eine Ausführungsform der Erfindung sieht vor, dass die zweite Periodendauer 5 ms nicht unterschreitet und insbesondere im Bereich von 8 ms bis 20 ms liegt.

Damit bleibt bei einem unstetigen Satzübergang noch ausreichend Zeit, eine Achse - ausgehend von einer noch akzeptablen Achsgeschwindigkeit - innerhalb eines Taktes auf v = 0 zu bremsen.

Die Erfindung ist besonders vorteilhaft bei einer Dreh- oder einer Fräsbearbeitung eines Werkstücks mittels einer Werkzeugmaschine anwendbar, da insbesondere bei diesen Bearbeitungen häufig Satzübergänge mit einem unstetigen Bahnverlauf auftreten.

Für das Fräsen und noch mehr für das Drehen ist das geschwindigkeitsabhängige Überschleifen die relevanteste Art des "Eckenverrundens" und dadurch die effizienteste Art der Bearbeitungszeitreduzierung. Bei den heutigen IPO-Taken von z.B. 4 ms bedeuten die "Geschwindigkeitssprünge" in den Achsen eine Schwingungsanregung von 125Hz. Das ist eine Anregung, die bei Werkzeugmaschinen in der Regel noch unkritisch ist, da typische Eigenfrequenzen der Maschinen bei bis zu 40Hz liegen. Bei IPO-Takten im Bereich 8 ms bis 10 ms wird für qualitativ hochwertige Maschinen die Obergrenze für das Funktionieren des geschwindigkeitsabhängigen Überschleifens liegen. Folglich wäre ein Technologietakt bei solchen Maschinen bei 8 bis 10 ms ideal, wobei der IPO-Takt dabei im Bereich von 1 bis 2 ms liegen sollte, um die beschriebenen Vorteile kleiner IPO-Takte weiterhin nutzen zu können.

Der IPO-Takt wird gewöhnlich von dem OEM (Original Equipment Manufacturer) der numerischen Steuereinrichtung eingestellt und ist nicht durch den Endanwender veränderbar.

Die Verwendung eines von dem IPO-Takt verschiedenen Technologietaktes bietet den Vorteil, dass dieser - neben einer Vorgabe durch den Steuerungshersteller - vorteilhaft auch durch einen OEM oder den Endanwender einstellbar ausgeführt sein kann. Dies erlaubt dem Endanwender maximale Flexibilität.

Eine Ausführungsform der Erfindung sieht vor, dass sich die Übergangs-Maximalbeschleunigung aus einer vorgebbaren maximalen Achsbeschleunigung und einem vorgebbaren Überlastfaktor zusammensetzt.

Die seitens des Maschinenbauers vorgegebene, maximale Achsbeschleunigung gilt insbesondere für längere Beschleunigungsstrecken bzw. Beschleunigungsdauern der Achse. Kurzeitig kann dieser Wert auch überschritten werden, ohne den Antrieb der Achse zu überlasten oder zu überhitzen. Der Überlastfaktor gibt an, um welchen Wert die maximale Achsbeschleunigung (kurzzeitig) überschritten werden darf. Typische Überlastfaktoren liegen im Bereich von 1,1 bis 2,0 bzw. analog als Prozent-Angaben zwischen 10% und 100%. Die Überlastfaktoren können aber auch bis in den Bereich von 20 reichen, je nachdem, wie lang bzw. kurz der wirksame Technologietakt ist.

Auch dieser Wert kann vorteilhaft vom Steuerungshersteller, vom OEM, vom Maschinenbauer oder vom Endanwender eingestellt werden.

Eine Ausführungsform der Erfindung sieht vor, dass die zweite Periodendauer bei einer Programmanweisung für ein geschwindigkeitsabhängiges Überschleifen, insbesondere bei einer G-Code-Anweisung, insbesondere bei einer G64-Anweisung, eingestellt wird.

Diese Ausführungsform bietet den Vorteil, dass damit bereits bestehende Teileprogramme weiterhin verwendet werden können.

Eine Ausführungsform der Erfindung sieht vor, dass für ein positives Beschleunigen und für ein negatives Beschleunigen der ersten lagegeregelten Achse unterschiedliche Beschleunigungsdauern und/oder unterschiedliche Übergangs-Maximalbeschleunigungen einstellbar sind.

Damit kann z.B. dem Umstand Rechnung getragen werden, dass beim Bremsen einer Achse die Reibung der Achse den Bremsvorgang unterstützt, wohingegen beim positiven Beschleunigen zusätzliche Achskräfte zum Überwinden der Reibung aufgebracht werden müssen. Der Antrieb einer Achse, der auf eine bestimmte maximale Stromzufuhr und damit auf ein bestimmtes maximales Drehmoment zum positiven Beschleunigen oder Bremsen beschränkt ist, kann damit beim Bremsen der Achse (Geschwindigkeitsabnahme) höhere Achsbeschleunigungen erreichen als beim positiven Beschleunigen (Geschwindigkeitszunahme).

Die eingangs genannte Aufgabe wird ferner gelöst durch ein Maschinensystem zur Durchführung eines Verfahrens nach einem der Ansprüche 1 bis 10, umfassend eine Maschine, die eine Mehrzahl von lagegeregelten Achsen aufweist, die in ihrer Gesamtheit in Verbindung mit einer numerischen Steuereinrichtung eine Verfahrbewegung eines ersten Elements der Maschine relativ zu einem zweiten Element der Maschine bewirken,

- wobei die Verfahrbewegung anhand von Programmanweisungen vorgebbar sind, die eine Bahnkurve mit einer Vielzahl an aneinandergrenzenden Bahnabschnitten definieren,

- wobei mittels der numerischen Steuereinrichtung aus den Programmanweisungen in einem Interpolationstakt mit einer vorgegebenen ersten Periodendauer Lagesollwerte für die lagegeregelten Achsen ermittelbar sind,

- wobei eine erste Programmanweisung einen ersten Bahnabschnitt und eine unmittelbar darauffolgende zweite Programmanweisung einen unmittelbar an den ersten Bahnabschnitt angrenzenden zweiten Bahnabschnitt definiert,

- wobei der erste und der zweite Bahnabschnitt in einem Berührpunkt nicht stetig differenzierbar ineinander übergehen,

- wobei für wenigstens eine erste lagegeregelte Achse eine von der ersten Periodendauer verschiedene Beschleunigungsdauer vorgebbar ist,

- wobei für die erste lagegeregelte Achse eine Übergangs-Maximalbeschleunigung vorgebbar ist,

- wobei für die erste lagegeregelte Achse (mittels der numerischen Steuereinrichtung) eine Übergangs-Maximalgeschwindigkeit ermittelt wird, derart, dass bei einer Bewegung der ersten lagegeregelten Achse mit der Übergangs-Maximalgeschwindigkeit unter Anwendung der Übergangs-Maximalbeschleunigung die Geschwindigkeit der ersten lagegeregelten Achse am Ende der Beschleunigungsdauer den Wert Null aufweist,

- wobei die Verfahrbewegung derart ermittelbar ist, dass die Geschwindigkeit der ersten lagegeregelten Achse beim Übergang von dem ersten Bahnabschnitt zu dem zweiten Bahnabschnitt die Übergangs-Maximalgeschwindigkeit nicht übersteigt,

- wobei bei der numerischen Steuereinrichtung ein von dem Interpolationstakt verschiedener Technologietakt mit einer zweiten Periodendauer vorgegeben wird und wobei die zweite Periodendauer als Beschleunigungsdauer eingestellt wird.

Die eingangs genannte Aufgabe wird weiterhin gelöst durch eine numerische Steuereinrichtung, insbesondere eine CNC-Steuerung oder eine Bahnsteuerung, zur Durchführung eines Betriebsverfahrens nach einem der Ansprüche 1 bis 10.

Die Erfindung wird nachfolgend anhand von Ausführungsbeispielen exemplarisch näher beschrieben und erläutert. Dabei zeigen:

FIG 1 Eine Werkzeugmaschinensystem zur Durchführung eines erfindungsgemäßen Verfahrens,

FIG 2 einen ersten Satzübergang in einem Teileprogramm,

FIG 3 einen zweiten Satzübergang in einem Teileprogramm,

FIG 4 einen Satzübergang in einem Teileprogramm mit einer von der Periodendauer des IPO-Takts verschiedenen Beschleunigungsdauer,

FIG 5 einen Satzübergang in einem Teileprogramm mit für die Beschleunigungsvorgänge der beteiligten Achsen unterschiedlichen, von der Periodendauer des IPO-Takts verschiedenen Beschleunigungsdauern,

FIG 6 Verfahrensschritte bei der Durchführung eines erfindungsgemäßen Verfahrens.

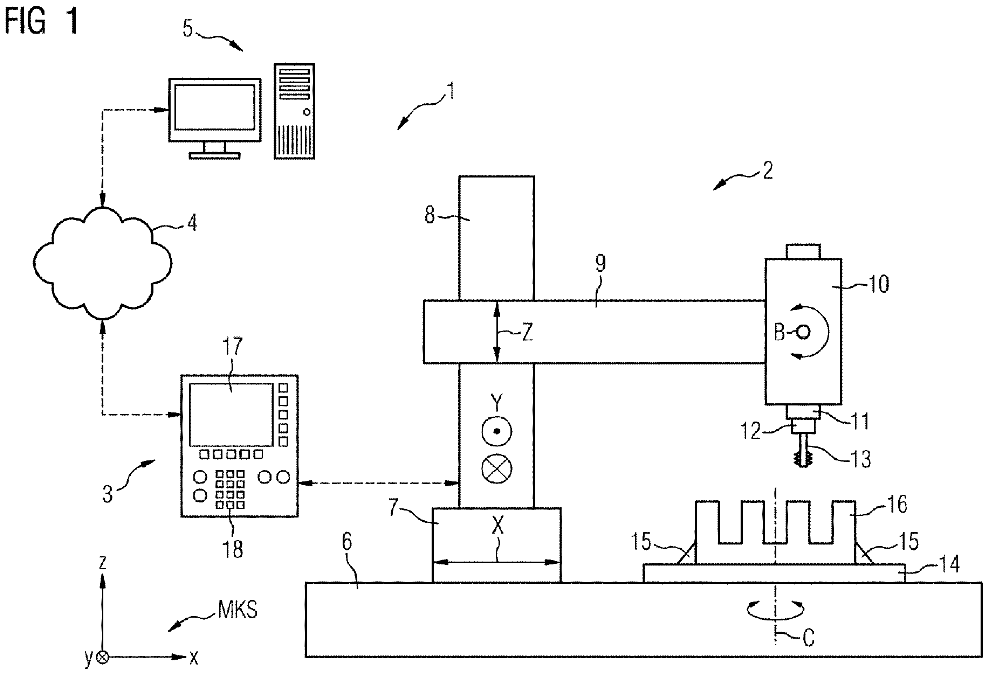

In FIG 1 ist schematisiert ein Bearbeitungsmaschinensystem in Form eines Werkzeugmaschinensystems 1 dargestellt. Das Werkzeugmaschinensystem 1 umfasst eine Bearbeitungsmaschine in Form einer Werkzeugmaschine 2. Ferner umfasst das Werkzeugmaschinensystem 1 eine mit der Werkzeugmaschine 2 verbundene numerische Steuereinrichtung in Form einer CNC-Steuerung 3 zur Steuerung der Werkzeugmaschine 2. Darüber hinaus umfasst das Werkzeugmaschinensystem 1 eine über ein Netzwerk 4, zum Beispiel das Internet, verbundene externe Recheneinrichtung in Form eines CAD/CAM-Systems 5.

Die dargestellte Werkzeugmaschine 2 verfügt über 3 lagegeregelte Linearachsen X, Y und Z, wobei ein erstes Tragelement 7 in x-Richtung, ein zweites Tragelement 8 in y-Richtung und ein drittes Tragelement 9 in z-Richtung bezüglich eines bezüglich der Werkzeugmaschine 2 ortsfesten Maschinenkoordinatensystems MKS verstellbar ist.

Das erste Tragelement 7 ist über einen in x-Richtung verstellbaren Linearantrieb (nicht dargestellt) mit einem ruhenden Maschinengestellt 6 verbunden, das zweite Tragelement 8 ist über einen in y-Richtung verstellbaren Linearantrieb (nicht dargestellt) mit dem ersten Tragelement 7 verbunden und das dritte Tragelement 9 ist über einen in z-Richtung verstellbaren Linearantrieb (nicht dargestellt) mit dem zweiten Tragelement 8 verbunden.

Das dritte Tragelement 9 trägt einen Spindelantrieb 10, der seinerseits um eine zur Y-Achse parallele, lagegeregelte Rundachse B schwenkbar ist. Der Spindelantrieb 10 weist seinerseits eine um eine Spindelachse (nicht dargestellt) rotierbare, drehzahl- und/oder lagegeregelte Werkzeugspindel 11 auf, in die ein Werkzeughalter 12 mit dem daran befestigten Werkzeug 13 eingespannt ist.

Weiterhin umfasst die Werkzeugmaschine 2 eine um eine parallel zur Z-Achse ausgerichtete, drehzahl- und/oder lagegeregelte Werkzeugtischachse C, um die ein Werkstücktisch 14 rotierbar ist.

Der Werkzeugtisch 14 ist ebenfalls mit dem ruhenden Maschinengestellt 6 verbunden und an dem Werkzeugtisch 14 ist mittels der Werkzeughalter 15 ein Werkstück 16 befestigt.

Die Werkzeugmaschine 2 verfügt im Rahmen des Ausführungsbeispiels demnach über fünf lagegeregelte Maschinenachsen, durch die eine Relativbewegung zwischen dem Werkzeug 13, das im Rahmen des Ausführungsbeispiels in Form eines Fräsers vorliegt, und dem Werkstück 16 durchgeführt werden kann. Es handelt sich somit um eine sogenannte 5-achsige Werkzeugmaschine (5-Achs-Maschine), wobei an dieser Stelle angemerkt sei, dass eine Werkzeugmaschine selbstverständlich auch noch mehr, aber auch weniger als fünf Maschinenachsen aufweisen kann. Die Antriebe der lagegeregelten Maschinenachsen wurden zur besseren Übersichtlichkeit im Ausführungsbeispiel nicht dargestellt.

Die Werkzeugmaschine 2 ist mit der CNC-Steuerung 3 verbunden, die anhand eines in der CNC-Steuerung 3 hinterlegten Teileprogramms und/oder einer Handbedieneingabe Bewegungssollwerte für die Maschinenachsen zur Steuerung einer zwischen dem Werkzeug 13 und dem Werkstück 16 stattfindenden Relativbewegung ermittelt. Die CNC-Steuerung 3 ermittelt die Bewegungssollwerte vorzugsweise anhand des Teileprogramms, in dem die von dem Werkzeug 13 relativ zu dem Werkstück 16 durchzuführenden Bewegungen in Form von Befehlen bzw. Programmanweisungen, in der Regel in Form von G-Code, definiert sind.

Alternativ oder zusätzlich kann die Bewegung des Werkzeugs 13 und/oder das Werkstücks 16 auch mittels einer Handbedieneingabe über eine Bedieneinrichtung mit Bedienelementen 18 in Verbindung mit einer Anzeigevorrichtung in Form eines Displays 17 der CNC-Steuerung 3 von einem Bediener vor Ort an der Werkzeugmaschine 2 vorgegeben werden. Die Bedienelemente 18 umfassen insbesondere Taster, oder Drehregler. Vorteilhaft kann das Display 17 auch als Touchscreen und damit ebenfalls als Bedienelement ausgeführt sein.

Das Teileprogramm wird üblicherweise in einer aus Sicht der CNC-Steuerung externen Recheneinrichtung, im Ausführungsbeispiel dem CAD/CAM-System 5 und einem eventuell dem CAD/CAM-System nachgeschalteten sogenannten Postprozessor (nicht dargestellt) außerhalb der CNC-Steuerung 3 erzeugt und von dort, insbesondere über das Netzwerk 4, auf die CNC-Steuerung 3 übertragen.

Alternativ kann das Teileprogramm auch direkt auf der CNC-Steuerung 3, z.B. im Rahmen einer sog. JobShop-Anwendung oder einer Zyklenprogrammierung, erzeugt worden sein.

Bei der Abarbeitung des Teileprogramms erzeugt die CNC-Steuerung 3 in einem bestimmten Takt, dem Interpolationstakt, Lagesollwerte x, y und z für die Linearachsen sowie Winkellagesollwerte $\beta$ und $\gamma$ für die Rundachsen. Durch diese Bewegungssollwerte wird das Werkzeug 13 mit vorgegebener Orientierung relativ zu dem Werkstück 16 entlang einer Bewegungsbahn (Bahn) bewegt.

Neben den reinen Lagesollwerten sind mittels der CNC-Steuerung 3 auch die Dynamik der Relativbewegung bzw. der einzelnen Achsen betreffende Größen, insbesondere die Geschwindigkeit, die Beschleunigung und der Ruck, ermittelbar bzw. einstellbar.

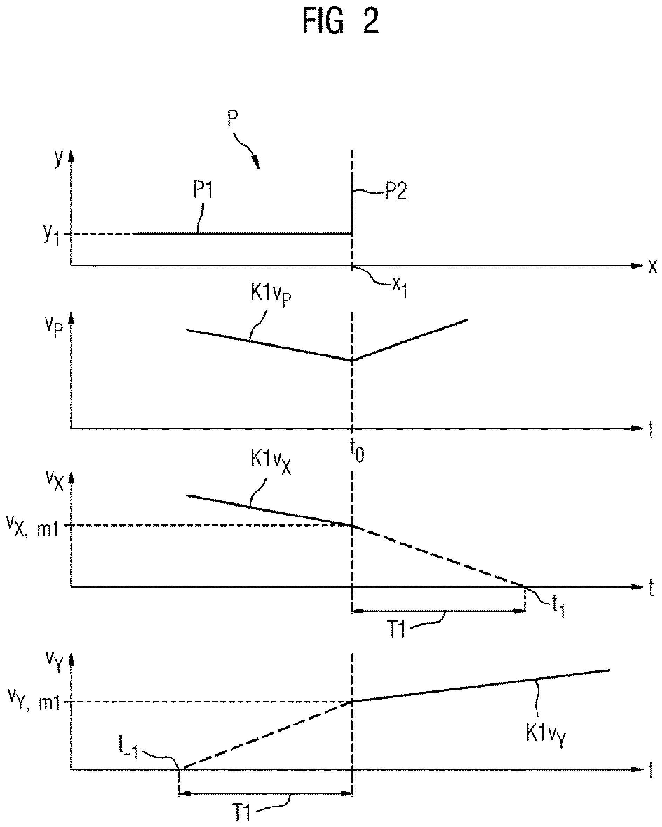

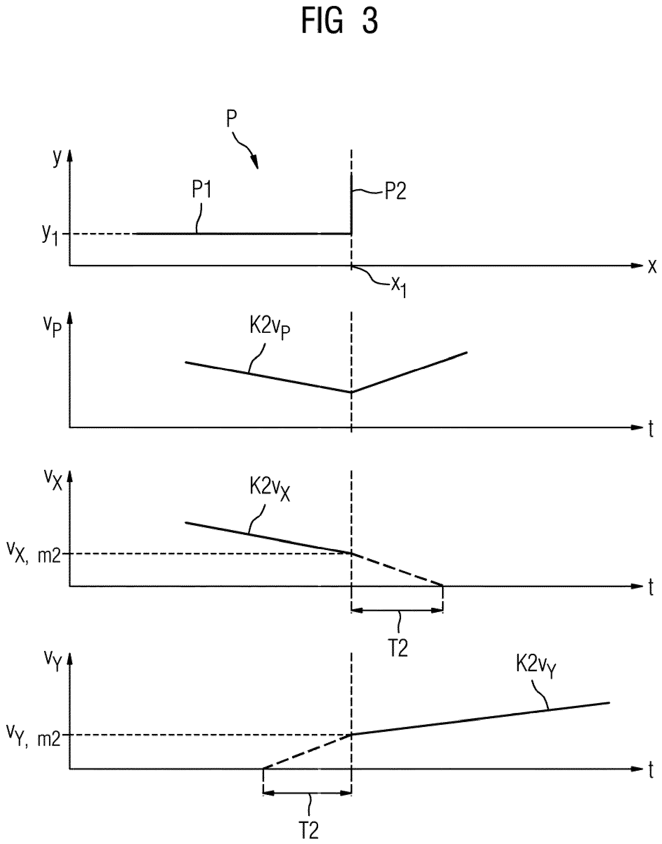

Die Figuren FIG 2 und FIG 3 veranschaulichen beispielhaft Sätze bzw. einen Satzübergang (auch als Satzwechsel bezeichnet) in einem Teileprogramm, die eine Ecke einer Werkzeugbahn P beschreiben, wobei die Werkzeugbahn P in einem ersten Bahnabschnitt P1 bis zu der Ecke parallel zu der x-Richtung verläuft und ab dem Eckpunkt $(x_1, y_1)$ in einem sich unmittelbar an den ersten Bahnabschnitt P1 anschließenden zweiten Bahnabschnitt P2 parallel zu der y-Richtung verläuft. Die x-bzw. y-Richtung bezüglich der Kontur soll dabei mit der X-bzw. Y-Achse der Maschine übereinstimmen. Selbstverständlich sind die im Ausführungsbeispiel zur Vereinfachung für diesen Sonderfall beschriebenen Ausführungen analog auf beliebig in dem Maschinenkoordinatensystem bzw. bezüglich der Maschinenachsen im Raum verlaufende Werkzeugbahnen mit nicht tangentialem Übergang zwischen Bahnabschnitten übertragbar.

Die Ecke mit dem Eckpunkt $(x_1, y_1)$ stellt im Ausführungsbeispiel somit einen nicht tangentialen bzw. nicht stetig differenzierbaren Bahnverlauf der Werkzeugbahn P dar, was bedeutet, dass die Achsen technisch nicht mögliche Geschwindigkeitssprünge ausführen müssten, um die Bahn P mit einer bestimmten Geschwindigkeit zu durchfahren.

Zur Lösung dieses Problems sind unterschiedliche Ansätze bekannt:

Gemäß einer ersten Lösung kann die Bahngeschwindigkeit $v_P$ in ihrem Verlauf bis zu der Geschwindigkeit $v_P = 0$ in der Ecke reduziert werden und dann - nach der Ecke - wieder zunehmen. Diese Variante wäre zwar konturtreu, führt jedoch zu langen Bearbeitungszeiten und ggf. unerwünschten Schwingungen an der Maschine.

Gemäß einer zweiten, hier näher betrachteten Lösung werden die Achsen nicht bis zum Stillstand abgebremst, was die Bearbeitungszeit verkürzt, aber zwangsläufig zumindest zu geringfügigen Abweichungen von der Sollkontur führt.

FIG 2 veranschaulicht in der ersten, oberen Abbildung den Bahnverlauf P mit der ersichtlichen Ecke in der Kontur in der x-y-Ebene. Ein erster Satz des Teileprogramms beschreibt die Bewegung des Werkzeugs entlang des ersten Bahnabschnitts P1 in x-Richtung bis zu dem Wert $x = x_1$. Ein sich an den ersten Satz anschließender zweiter Satz beschreibt die Bewegung in y-Richtung, ausgehend von dem Eckpunkt $(x_1, y_1)$, entlang des zweiten Bahnabschnitts P2. Der Satzwechsel bzw. Satzübergang beschreibt so einen nicht tangentialen bzw. nicht stetig differenzierbaren Bahnverlauf, im Ausführungsbeispiel eine 90°-Ecke.

Wie bereits angedeutet, soll die Bahn auch im Bereich der Ecke mit einer Geschwindigkeit $v_P > 0$ gefahren werden. Dies ist in FIG 2 mit der unterhalb der ersten Abbildung ersichtlichen zweiten Abbildung veranschaulicht. Der Eckpunkt $(x_1, y_1)$ wird zu einem Zeitpunkt $t = t_0$ erreicht, in dem die Bahngeschwindigkeit $v_P$ einen Wert $v_P > 0$ aufweist.

Die in FIG 2 darunter liegenden Abbildungen veranschaulichen den Geschwindigkeitsverlauf der X- sowie der Y-Achse.

Zum Zeitpunkt $t = t_0$ weist die X-Achse die Übergangs-Maximalgeschwindigkeit $v_{X,m1}$ (dritte Abbildung) und die Y-Achse die Übergangs-Maximalgeschwindigkeit $v_{Y,m1}$ auf (vierte Abbildung). $v_{X,m1}$ und $v_{Y,m1}$ werden seitens der numerischen Steuereinrichtung (CNC-Steuerung) so bestimmt und eingestellt, dass die X-Achse genau in einem IPO-Takt, ausgehend von der Achsgeschwindigkeit $v_{\Sigma,m1}$, mit der Übergangs-Maximalbeschleunigung $a_{X,m1}$ (nicht dargestellt) beschleunigt (insbesondere bremst) und am Ende des IPO-Takts T1 (zu einem Zeitpunkt $t = t_1$) den Wert $v_X = 0$ erreicht.

In ähnlicher Weise wird die Y-Achse ausgehend von $v_Y = 0$, beginnend im Zeitpunkt $t = t_{-1}$ und damit genau die Zeitdauer eines IPO-Taktes T1 (sowohl der Takt selbst als auch dessen Periodendauer werden nachfolgend als "T..." bezeichnet) vor dem Zeitpunkt $t_0$, mit der Übergangs-Maximalbeschleunigung $a_{Y,m1}$ (positiv) beschleunigt, so dass die Y-Achse zum Zeitpunkt $t = t_0$ die Übergangs-Maximalgeschwindigkeit $v_{Y,m1}$ aufweist.

Die Steigungen der gezeigten Kennlinien für den Geschwindigkeitsverlauf stellen die Beschleunigung der betreffenden Achse dar. Die Übergangs-Maximalbeschleunigung (nicht dargestellt) stellt somit die Steigung der Geschwindigkeits-Kennlinie $K1v_X$ bzw. $K1v_Y$ für den jeweils strichliert gezeichneten Teil der betreffenden Kennlinie dar, in dem jeweils die Maximalbeschleunigung vorliegt. Die Übergangs-Maximalbeschleunigung für die jeweilige Achse setzt sich dabei aus einer für die jeweilige Achse vorgegebenen Maximalbeschleunigung $a_{max}$ und einem Überlastfaktor f zusammen, in der Form:

$$a_{X,m1} = a_{X,max} * f_X$$

$$a_{Y,m1} = a_{Y,max} * f_Y$$

Vorzugsweise bewegt sich der Überlastfaktor in dem Bereich

$$1 < f \leq 2$$

FIG 3 veranschaulicht die gleiche Situation mit dem Unterschied, dass die verwendete Steuerung einen im Vergleich zum vorherigen Fall nur halb so langen IPO-Takt T2 aufweist.

Bei sonst gleichen Gegebenheiten wird aus dem Vergleich der FIG 2 und 3 und insbesondere aus dem Vergleich der Geschwindigkeitsverläufe $K1_X$ bzw. $K1v_Y$ und $K2v_X$ bzw. $K2v_Y$ ersichtlich, dass sich mit dem (halbierten) IPO-Takt T2 auch die entsprechenden Übergangs-Maximalgeschwindigkeiten $v_{X,m2}$ bzw. $v_{Y,m2}$ im Vergleich zu $v_{x,m1}$ und $v_{Y,m1}$ halbieren. Die Bahngeschwindigkeit im Bereich der Ecke ($x_1$, $y_1$), ersichtlich anhand der Kennlinie K2$v_P$, verlangsamt sich daher deutlich, was z.B. bei einem Werkstück, in das eine rechteckige Tasche gefräst werden soll, insgesamt zu einer wesentlich längeren Bearbeitungszeit für die Bearbeitung des betreffenden Werkstücks führen kann.

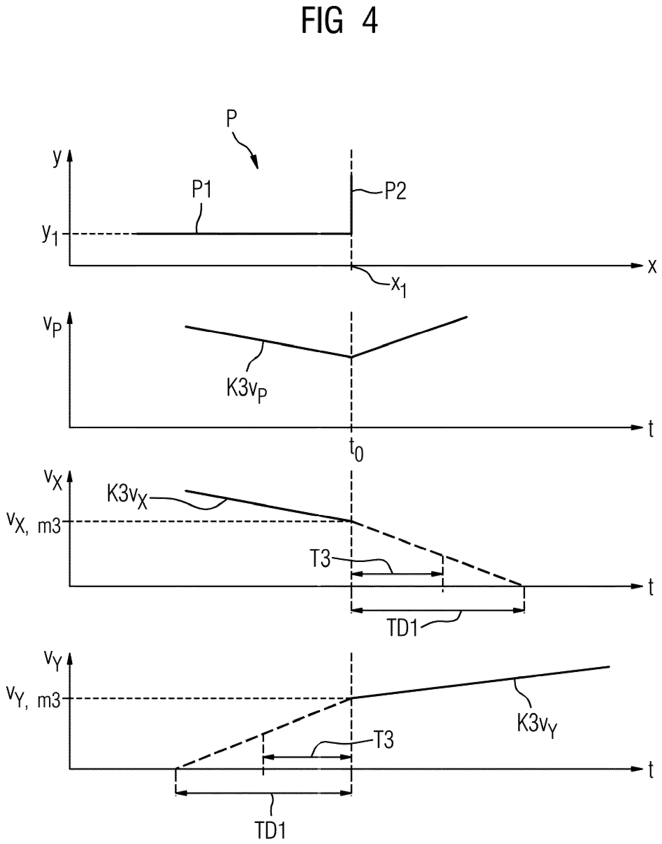

FIG 4 veranschaulicht nun die erfindungsgemäße Situation, bei der für die Beschleunigungsvorgänge der beteiligten Achsen eine von der Periodendauer des IPO-Takts T3 verschiedene Beschleunigungsdauer TD1 vorgegeben ist. Dabei wird ein Technologietakt TD1 mit eben dieser Beschleunigungsdauer TD1 definiert, der im Ausführungsbeispiel die doppelte Periodendauer des ersichtlichen IPO-Takts T3 aufweist. Zudem liegen die Taktflanken des Technologietakts TD1 auf Taktflanken des IPO-Takts T3, was zeichnerisch daran ersichtlich ist, dass beide Takte bei $t = t_0$ beginnen.

Wie aus der Figur FIG 4 ersichtlich ist, arbeitet die Steuerung intern, z.B. bei der Ermittlung von Lagesollwerten, mit dem kürzeren IPO-Takt T3, wohingegen für die Geschwindigkeitsänderung am Satzübergang der längere Technologietakt TD1 wirksam ist. Dadurch sind sowohl eine hochgenaue Lageregelung als auch eine hohe Bahngeschwindigkeit bei einem Satzwechsel mit unstetigem Bahnverlauf möglich.

Technisch kann der über mehrere (im Ausführungsbeispiel genau 2) IPO-Takte verteilte "Geschwindigkeitssprung" z.B. durch einen Puffer für den IPO-Takt realisiert werden, dessen Tiefe der Anzahl der IPO-Takte entspricht, über die gesprungen werden soll, im Ausführungsbeispiel damit ebenfalls genau 2.

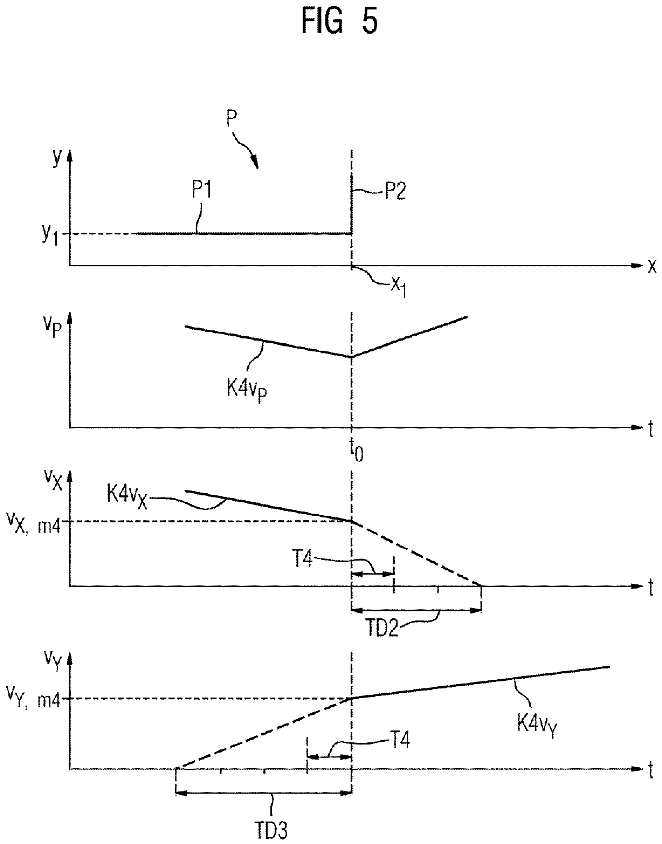

FIG 5 veranschaulicht eine erfindungsgemäße Ausführungsform, bei der für die Beschleunigungsvorgänge der beteiligten Achsen unterschiedliche, von der Periodendauer T4 des IPO-Takts verschiedene Beschleunigungsdauern vorgegeben sind.

So ist als Beschleunigungsdauer zum Bremsen der X-Achse eine Zeitdauer TD2 vorgesehen, die 3 IPO-Takten T4 entspricht.

Für die Y-Achse ist zum positiven Beschleunigen eine Beschleunigungsdauer TD3 vorgesehen, die 4 IPO-Takten T4 entspricht.

Diese Vorgehensweise bietet die größtmögliche Flexibilität bei der Festlegung der maximalen Beschleunigungsdauer für die betreffende Achse beim Satzwechsel.

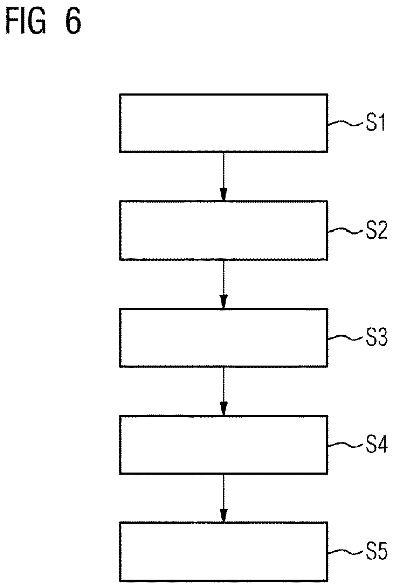

Nachfolgend werden die wesentlichen Verfahrensschritte bei der Durchführung eines erfindungsgemäßen Verfahrens nochmals in Form eines Ablaufdiagramms gemäß FIG 6 verdeutlicht.

In einem ersten Verfahrensschritt S1 wird eine Verfahrbewegung für eine Maschine, die eine Mehrzahl von lagegeregelten Achsen aufweist, die in ihrer Gesamtheit in Verbindung mit einer numerischen Steuereinrichtung eine Verfahrbewegung eines ersten Elements der Maschine relativ zu einem zweiten Element der Maschine bewirken, anhand von (in der numerischen Steuereinrichtung hinterlegten) Programmanweisungen vorgegeben, die eine Bahnkurve mit einer Vielzahl an aneinandergrenzenden Bahnabschnitten definieren.

In einem Verfahrensschritt S2 ermittelt die numerische Steuereinrichtung aus den Programmanweisungen in einem Interpolationstakt mit einer vorgegebenen ersten Periodendauer Lagesollwerte für die lagegeregelten Achsen, wobei eine erste Programmanweisung einen ersten Bahnabschnitt und eine unmittelbar darauffolgende zweite Programmanweisung einen unmittelbar an den ersten Bahnabschnitt angrenzenden zweiten Bahnabschnitt definiert und wobei der erste und der zweite Bahnabschnitt in einem Berührpunkt nicht stetig differenzierbar ineinander übergehen. Das heißt, der Bahnverlauf weist einen Knick bzw. eine Ecke auf und zum Durchfahren der Bahn mit einer bestimmten Bahngeschwindigkeit wären im Bereich des Knicks (technisch nicht mögliche) Geschwindigkeitssprünge der an der Bewegung beteiligten Maschinenachsen erforderlich.

In einem Verfahrensschritt S3 ermittelt die numerische Steuereinrichtung für wenigstens eine erste lagegeregelte Achse in Abhängigkeit einer vorgegebenen, von der ersten Periodendauer verschiedenen Beschleunigungsdauer und einer vorgegebenen Übergangs-Maximalbeschleunigung eine Übergangs-Maximalgeschwindigkeit, derart, dass bei einer Bewegung der ersten lagegeregelten Achse mit der Übergangs-Maximalgeschwindigkeit unter Anwendung der Übergangs-Maximalbeschleunigung die Geschwindigkeit der ersten lagegeregelten Achse am Ende der Beschleunigungsdauer den Wert Null aufweist.

Alternativ oder zusätzlich ermittelt die numerische Steuereinrichtung für wenigstens eine zweite lagegeregelte Achse in Abhängigkeit einer vorgegebenen, von der ersten Periodendauer verschiedenen Beschleunigungsdauer und einer vorgegebenen Übergangs-Maximalbeschleunigung eine Übergangs-Maximalgeschwindigkeit, derart, dass bei einer Bewegung der zweiten lagegeregelten Achse ausgehend von einer Übergangs-Anfangsgeschwindigkeit, insbesondere der Übergangs-Anfangsgeschwindigkeit $v = 0$, unter Anwendung der Übergangs-Maximalbeschleunigung die Geschwindigkeit der zweiten lagegeregelten Achse am Ende der Beschleunigungsdauer die Übergangs-Maximalgeschwindigkeit aufweist.

In einem Verfahrensschritt S4 ermittelt die numerische Steuereinrichtung die Verfahrbewegung derart, dass die Geschwindigkeit der ersten und/oder der zweiten lagegeregelten Achse beim Übergang von dem ersten Bahnabschnitt zu dem zweiten Bahnabschnitt die ermittelte Übergangs-Maximalgeschwindigkeit nicht übersteigt.

In einem Verfahrensschritt S5 führt die numerische Steuereinrichtung die ermittelte Verfahrbewegung bei der Maschine aus.

**Patentansprüche**

1. Betriebsverfahren für eine Maschine (2), die eine Mehrzahl von lagegeregelten Achsen (X, Y, Z, B, C) aufweist, die in ihrer Gesamtheit in Verbindung mit einer numerischen Steuereinrichtung (3) eine Verfahrbewegung eines ersten Elements der Maschine relativ zu einem zweiten Element der Maschine bewirken,

   - wobei die Verfahrbewegung anhand von Programmanweisungen vorgegeben wird, die eine Bahnkurve (P) mit einer Vielzahl an aneinandergrenzenden Bahnabschnitten (P1, P2) definieren,
   - wobei die numerische Steuereinrichtung (3) aus den Programmanweisungen in einem Interpolationstakt mit einer vorgegebenen ersten Periodendauer (T1, T2, T3, T4) Lagesollwerte für die lagegeregelten Achsen (X, Y, Z, B, C) ermittelt,
   - wobei eine erste Programmanweisung einen ersten Bahnabschnitt (P1) und eine unmittelbar darauffolgende zweite Programmanweisung einen unmittelbar an den ersten Bahnabschnitt (P1) angrenzenden zweiten Bahnabschnitt (P2) definiert,
   - wobei der erste (P1) und der zweite Bahnabschnitt (P2) in einem Berührpunkt $(x_1, y_1)$ nicht stetig differenzierbar ineinander übergehen,
   - wobei für wenigstens eine erste lagegeregelte Achse (X) eine von der ersten Periodendauer (T1, T2, T3, T4) verschiedene Beschleunigungsdauer (TD1, TD2, TD3) vorgebbar ist,
   - wobei für die erste lagegeregelte Achse (X) eine Übergangs-Maximalbeschleunigung vorgebbar ist,
   - wobei für die erste lagegeregelte Achse (X) eine Übergangs-Maximalgeschwindigkeit $(v_{X,m3})$ ermittelt wird, derart, dass bei einer Bewegung der ersten lagegeregelten Achse (X) mit der Übergangs-Maximalgeschwindigkeit $(v_{X,m3})$ unter Anwendung der Übergangs-Maximalbeschleunigung die Geschwindigkeit $(v_X)$ der ersten lagegeregelten Achse (X) am Ende der Beschleunigungsdauer (TD1) den Wert Null aufweist,
   - wobei die Verfahrbewegung derart ermittelt wird, dass die Geschwindigkeit $(v_X)$ der ersten lagegeregelten Achse (X) beim Übergang von dem ersten Bahnabschnitt (P1) zu dem zweiten Bahnabschnitt (P2) die Übergangs-Maximalgeschwindigkeit $(v_{X,m3})$ nicht übersteigt,
   - **gekennzeichnet dadurch, dass** bei der numerischen Steuereinrichtung (3) ein von dem Interpolationstakt verschiedener Technologietakt mit einer zweiten Periodendauer (TD1, TD2, TD3) vorgegeben wird und wobei die zweite Periodendauer (TD1, TD2, TD3) als Beschleunigungsdauer eingestellt wird.

2. Betriebsverfahren nach Anspruch 1, wobei die zweite Periodendauer (TD1, TD2, TD3) ein ganzzahliges Vielfaches der ersten Periodendauer (T1, T2, T3, T4) beträgt.

3. Betriebsverfahren nach Anspruch 2, wobei die Taktflanken des Technologietakts auf Taktflanken des Interpolationstakts liegen.

4. Betriebsverfahren nach einem der vorherigen Ansprüche, wobei die erste Periodendauer (T1, T2, T3, T4) 5 ms nicht übersteigt und insbesondere im Bereich von 1 ms bis 3 ms liegt.

5. Betriebsverfahren nach einem der vorherigen Ansprüche, wobei die zweite Periodendauer (TD1, TD2, TD3) 5 ms nicht unterschreitet und insbesondere im Bereich von 8 ms bis 20 ms liegt.

6. Betriebsverfahren nach einem der vorherigen Ansprüche, wobei die Maschine (2) als Werkzeugmaschine (2) ausgebildet ist und mit dieser eine Dreh- oder eine Fräsbearbeitung eines Werkstücks (16) durchgeführt wird.

7. Betriebsverfahren nach einem der vorherigen Ansprüche, wobei der Technologietakt von einem Maschinenbauer oder einem Maschinenbediener eingestellt wird.

8. Betriebsverfahren nach einem der vorherigen Ansprüche, wobei die Übergangs-Maximalbeschleunigung in Abhängigkeit einer vorgebbaren maximalen Achsbeschleunigung und eines vorgebbaren Überlastfaktors der ersten lagegeregelten Achse (X) ermittelt wird.

9. Betriebsverfahren nach einem der vorherigen Ansprüche, wobei die zweite Periodendauer (TD1, TD2, TD3) bei einer Programmanweisung für ein geschwindigkeitsabhängiges Überschleifen, insbesondere bei einer G-Code-Anweisung, insbesondere bei einer G64-Anweisung eingestellt wird.

10. Betriebsverfahren nach einem der vorherigen Ansprüche, wobei für ein positives Beschleunigen und für ein negatives Beschleunigen der ersten lagegeregelten Achse (X) unterschiedliche Beschleunigungsdauern und/oder unterschiedliche Übergangs-Maximalbeschleunigungen einstellbar sind.

11. Steuereinrichtung (3), insbesondere CNC-Steuerung oder Bahnsteuerung, zur Durchführung eines Betriebsverfahrens nach einem der Ansprüche 1 bis 10,

- wobei die numerische Steuereinrichtung (3) dazu eingerichtet ist, eine Maschine (2), die eine Mehrzahl von lagegeregelten Achsen (X, Y, Z, B, C) aufweist, zu steuern,
- wobei mittels der numerischen Steuereinrichtung (3) eine Verfahrbewegung eines ersten Elements der Maschine (2) relative zu einem zweiten Element der Maschine (2) durchführbar ist,
- wobei die Verfahrbewegung anhand von Programmanweisungen vorgegeben ist, die eine Bahnkurve (P) mit einer Vielzahl an aneinandergrenzenden Bahnabschnitten (P1, P2) definieren,
- wobei die numerische Steuereinrichtung (3) dazu eingerichtet ist, aus den Programmanweisungen in einem Interpolationstakt mit einer vorgegebenen ersten Periodendauer (T1, T2, T3, T4) Lagesollwerte für die lagegeregelten Achsen (X, Y, Z, B, C) zu ermitteln,
- wobei eine erste Programmanweisung einen ersten Bahnabschnitt (P1) und eine unmittelbar darauffolgende zweite Programmanweisung einen unmittelbar an den ersten Bahnabschnitt (P1) angrenzenden zweiten Bahnabschnitt (P2) definiert,
- wobei der erste (P1) und der zweite Bahnabschnitt (P2) in einem Berührpunkt (x1, y1) nicht stetig differenzierbar ineinander übergehen,
- wobei die numerische Steuereinrichtung (3) dazu eingerichtet ist, für wenigstens eine erste lagegeregelte Achse (X) eine von der ersten Periodendauer (T1, T2, T3, T4) verschiedene Beschleunigungsdauer (TD1, TD2, TD3) vorzugeben,
- wobei die numerische Steuereinrichtung (3) dazu eingerichtet ist, für die erste lagegeregelte Achse (X) eine Übergangs-Maximalbeschleunigung vorzugeben,
- wobei die numerische Steuereinrichtung (3) dazu eingerichtet ist, für die erste lagegeregelte Achse (X) eine Übergangs-Maximalgeschwindigkeit ($v_{x,m3}$) zu ermitteln, derart, dass bei einer Bewegung der ersten lagegeregelten Achse (X) mit der Übergangs-Maximalgeschwindigkeit ($v_{x,m3}$) unter Anwendung der Übergangs-Maximalbeschleunigung die Geschwindigkeit der ersten lagegeregelten Achse (X) am Ende der Beschleunigungsdauer den Wert Null aufweist,
- wobei die numerische Steuereinrichtung (3) dazu eingerichtet ist, die Verfahrbewegung derart zu ermitteln, dass die Geschwindigkeit ($v_x$) der ersten lagegeregelten Achse (X) beim Übergang von dem ersten Bahnabschnitt (P1) zu dem zweiten Bahnabschnitt (P1) die Übergangs-Maximalgeschwindigkeit ($v_{X,m3}$) nicht übersteigt,
- **gekennzeichnet dadurch, dass** bei der numerischen Steuereinrichtung (3) ein von dem Interpolationstakt verschiedener Technologietakt mit einer zweiten Periodendauer (TD1, TD2, TD3) vorgebbar ist,

und wobei die zweite Periodendauer (TD1, TD2, TD3) als Beschleunigungsdauer einstellbar ist.

**12.** Maschinensystem zur Durchführung eines Betriebsverfahrens nach einem der Ansprüche 1 bis 10, umfassend eine Maschine (2), die eine Mehrzahl von lagegeregelten Achsen (X, Y, Z, B, C) aufweist,

- wobei das Maschinensystem eine numerische Steuereinrichtung (2) nach Anspruch 11 umfasst,

die dazu ausgelegt ist, (3) eine Verfahrbewegung eines ersten Elements der Maschine relativ zu einem zweiten Element der Maschine zu bewirken.

**Claims**

**1.** Operating method for a machine (2) which has a plurality of position-controlled axes (X, Y, Z, B, C) which in their entirety, in connection with a numerical control facility (3), cause a traversing movement of a first element of the machine relative to a second element of the machine,

- wherein the traversing movement is predefined using program instructions which define a path (P) with a large number of adjacent path sections (P1, P2),
- wherein the numerical control facility (3) ascertains position setpoints for the position-controlled axes (X, Y, Z, B, C) from the program instructions in an interpolation cycle with a predefined first period (T1, T2, T3, T4),
- wherein a first program instruction defines a first path section (P1) and an immediately following second program instruction defines a second path section (P2) immediately adjacent to the first path section (P1),
- wherein at a contact point ($x_1, y_1$) the first (P1) and the second path section (P2) merge into one another in a manner that is not continuously differentiable,
- wherein an acceleration duration (TD1, TD2, TD3) which is different from the first period (T1, T2, T3, T4) can be predefined for at least one first position-controlled axis (X),
- wherein a transition maximum acceleration can be predefined for the first position-controlled axis (X),
- wherein a transition maximum speed ($v_{x,m3}$) is ascertained for the first position-controlled axis (X) in such a way that, when the first position-controlled axis (X) moves with the transition maximum speed ($v_{x,n3}$) by applying the transition maximum acceleration, the speed ($v_x$) of the first position-controlled axis (X) has the value zero at the end of the acceleration duration (TD1),

- wherein the traversing movement is ascertained in such a way that the speed ($v_x$) of the first position-controlled axis (X) does not exceed the transition maximum speed ($v_{x,m3}$) during the transition from the first path section (P1) to the second path section (P2),

- **characterised in that** a technology cycle, which is different from the interpolation cycle, with a second period (TD1, TD2, TD3) is predefined in the numerical control facility (3) and wherein the second period (TD1, TD2, TD3) is set as the acceleration duration.

2. Operating method according to claim 1, wherein the second period (TD1, TD2, TD3) is an integral multiple of the first period (T1, T2, T3, T4).

3. Operating method according to claim 2, wherein the cycle edges of the technology cycle lie on cycle edges of the interpolation cycle.

4. Operating method according to one of the preceding claims, wherein the first period (T1, T2, T3, T4) does not exceed 5 ms and is, in particular, in the range from 1 ms to 3 ms.

5. Operating method according to one of the preceding claims, wherein the second period (TD1, TD2, TD3) does not fall below 5 ms and is, in particular, in the range from 8 ms to 20 ms.

6. Operating method according to one of the preceding claims, wherein the machine (2) is embodied as a machine tool (2) and is used to carry out turning or milling of a workpiece (16).

7. Operating method according to one of the preceding claims, wherein the technology cycle is set by a machine manufacturer or a machine operator.

8. Operating method according to one of the preceding claims, wherein the transition maximum acceleration is ascertained as a function of a predefinable maximum axis acceleration and a predefinable overload factor of the first position-controlled axis (X).

9. Operating method according to one of the preceding claims, wherein the second period (TD1, TD2, TD3) is set in a program instruction for speed-dependent grinding, in particular in a G-code instruction, in particular in a G64 instruction.

10. Operating method according to one of the preceding claims, wherein different acceleration durations and/or different transition maximum accelerations can be set for a positive acceleration and for a negative acceleration of the first position-controlled axis (X).

11. Control facility (3), in particular CNC controller or path controller, for carrying out an operating method according to one of claims 1 to 10,

- wherein the numerical control facility (3) is configured to control a machine, which has a plurality of position-controlled axes (X, Y, Z, B, C), by means of the numerical control facility (3),
- wherein a traversing movement of a first element of the machine (2) relative to a second element of the machine (2) can be carried out by means of the numerical control facility (3),
- wherein the traversing movement can be predefined using program instructions which define a trajectory (P) with a large number of adjacent path sections (P1, P2),
- wherein the numerical control facility (3) is configured to ascertain position setpoints for the position-controlled axes (X, Y, Z, B, C) by means of the numerical control facility (3) from the program instructions in an interpolation cycle with a predefined first period (T1, T2, T3, T4),
- wherein a first program instruction defines a first path section (P1) and an immediately following second program instruction defines a second path section (P2) directly adjacent to the first path section (P1),
- wherein at a contact point (x1, y1) the first (P1) and the second path section (P2) merge into one another in a manner that is not continuously differentiable,
- wherein the numerical control facility (3) is configured to predefine an acceleration duration (TD1, TD2, TD3), which is different from the first period (T1, T2, T3, T4), for at least one first position-controlled axis (X),
- wherein the numerical control facility (3) is configured to predefine a transition maximum acceleration for the first position-controlled axis (X),
- wherein the numerical control facility (3) is configured to ascertain a transition maximum speed ($v_{x,m3}$) for the first position-controlled axis (X) in such a way that when the first position-controlled axis (X) moves with the transition maximum speed ($v_{x,m3}$) by applying the transition maximum acceleration, the speed of the first position-controlled axis (X) has the value zero at the end of the acceleration duration,
- wherein the numerical control facility (3) is configured to ascertain the traversing movement in such a way that the speed ($v_x$) of the

first position-controlled axis (X) does not exceed the transition maximum speed ($v_{x,m3}$) during the transition from the first path section (P1) to the second path section (P1),

- **characterised in that** a technology cycle, which is different from the interpolation cycle, with a second period (TD1, TD2, TD3) is predefined in the numerical control facility (3), and wherein the second period (TD1, TD2, TD3) is set as the acceleration duration.

12. Machine system for carrying out an operating method according to one of claims 1 to 10, comprising a machine (2) which has a plurality of position-controlled axes (X, Y, Z, B, C),

- wherein the machine system comprises a numerical control facility (2) according to claim 11,

which is designed (3) to cause a traversing movement of a first element of the machine relative to a second element of the machine.

## Revendications

1. Procédé pour faire fonctionner une machine (2), qui a une pluralité d'axes (X, Y, Z, B, C) réglés en position qui, dans leur ensemble en liaison avec un dispositif (3) de commande numérique provoque un mouvement de déplacement d'un premier élément de la machine par rapport à un deuxième élément de la machine,

- dans lequel on prescrit le mouvement de déplacement à l'aide d'instructions de programmation, qui définissent une portion (P) de trajectoire ayant une pluralité de tronçons (P1, P2) de trajectoire voisins les uns des autres,
- dans lequel le dispositif (3) de commande numérique détermine, à partir des instructions de programmation dans un cycle d'interpolation ayant une première période (T1, T2, T3, T4) donnée à l'avance, des valeurs de consigne de position des axes (X, Y, Z, B, C) régulés en position,
- dans lequel une première instruction de programmation définit un premier tronçon (P1) de trajectoire et une deuxième instruction de programmation suivant immédiatement définit un deuxième tronçon (P2) de trajectoire directement voisin du premier tronçon (P1) de trajectoire,
- dans lequel le premier (P1) et le deuxième tronçons (P2) de trajectoire peuvent passer l'un dans l'autre d'une manière différentielle non continue en un point ($x_1$, $y_1$) de contact,
- dans lequel, pour au moins un premier axe (X) réglé en position, une durée (TD1, TD2, TD3) d'accélération différente de la première période (T1, T2, T3, T4) peut être prescrite,
- dans lequel, pour le premier axe (X) réglé en position, une accélération maximum de transition peut être prescrite,
- dans lequel on détermine, pour le premier axe (X) réglé en position, une vitesse ($V_{X,m3}$) maximum de transition, de manière à ce que, lors d'un mouvement du premier axe (X) réglé en position à la vitesse ($V_{X,m3}$) maximum de transition, en utilisant l'accélération maximum de transition, la vitesse ($v_X$) du premier axe (X) réglé en position à la fin de la durée (TD1) d'accélération ait la valeur zéro,
- dans lequel on détermine le mouvement de déplacement de manière à ce que la vitesse ($v_X$) du premier axe (X) réglé en position ne dépasse pas la vitesse ($V_{X,m3}$) maximum de transition lors de la transition du premier tronçon (P1) de la trajectoire au deuxième tronçon (P2) de la trajectoire,
- **caractérisé en ce que**
l'on prescrit, au dispositif (3) de commande numérique, un cycle technologique ayant une deuxième période (TD1, TD2, TD3) différent du cycle d'interpolation et dans lequel on établit, comme durée d'accélération, la deuxième période (TD1, TD2, TD3).

2. Procédé suivant la revendication 1, dans lequel la deuxième période (TD1, TD2, TD3) représente un multiple en nombre entier de la première période (T1, T2, T3, T4).

3. Procédé suivant la revendication 2, dans lequel les flancs du cycle technologique sont sur des flancs du cycle d'interpolation.

4. Procédé suivant l'une des revendications précédentes, dans lequel la première période (T1, T2, T3, T4) ne dépasse pas 5 ms et est en particulier dans la plage de 1 ms à 3 ms.

5. Procédé suivant l'une des revendications précédentes, dans lequel la deuxième période (TD1, TD2, TD3) n'est pas inférieure à 5 ms et est en particulier dans la plage de 8 ms à 20 ms.

6. Procédé suivant l'une des revendications précédentes, dans lequel la machine (2) est constituée en machine-outil (2) et on effectue, avec celle-ci, un usinage au tour ou un fraisage d'une pièce (16).

7. Procédé suivant l'une des revendications précédentes, dans lequel le cycle technologique est établi par un constructeur de la machine ou par un opérateur de la machine.

**8.** Procédé suivant l'une des revendications précédentes, dans lequel on détermine l'accélération maximum de transition en fonction d'une accélération maximum d'axe pouvant être donnée à l'avance et d'un facteur de surcharge pouvant être donné à l'avance du premier axe (X) réglé en position.

**9.** Procédé suivant l'une des revendications précédentes, dans lequel on établit la deuxième période (TD1, TD2, TD3) lors d'une instruction de programmation pour un ponçage en fonction de la vitesse, en particulier pour une instruction de code G, en particulier pour une instruction G64.

**10.** Procédé suivant l'une des revendications précédentes, dans lequel, pour une accélération positive et une accélération négative du premier axe (X) réglé en position, on établit des durées d'accélération différentes et/ou des accélérations de transition différentes.

**11.** Dispositif (3) de commande, en particulier commande CNC ou commande de trajectoire, pour effectuer un procédé suivant l'une des revendications 1 à 10,

- dans lequel le dispositif (3) de commande numérique est agencé pour commander une machine (2), qui a une pluralité d'axes (X, Y, Z, B, C) réglés en position,
- dans lequel, au moyen du dispositif (3) de commande numérique, on peut effectuer un mouvement de déplacement d'un premier élément de la machine (2) par rapport à un deuxième élément de la machine (2),
- dans lequel le mouvement de déplacement est prescrit à l'aide d'instructions de programmation, qui définissent une portion (P) de trajectoire ayant une pluralité de tronçons (P1, P2) de trajectoire voisins les uns des autres,
- dans lequel le dispositif (3) numérique est agencé pou déterminer, à partir des instructions de programmation, dans un cycle d'interpolation ayant une première période (T1, T2, T3, T4) donnée à l'avance, des valeurs de consigne de position, des axes (X, Y, Z, B, C) réglés en position,
- dans lequel une première instruction de programmation définit un premier tronçon (P1) de trajectoire et une deuxième instruction de programmation suivant immédiatement définit un deuxième tronçon (P2) de trajectoire directement voisin du premier tronçon (P1) de trajectoire,
- dans lequel le premier (P1) et le deuxième tronçons (P2) de trajectoire passent l'un dans l'autre d'une manière différentielle non continue en un point ($x_1$, $y_1$) de contact,

- dans lequel le dispositif (3) de commande numérique est agencé pour prescrire pour au moins un premier axe (X) réglé en position, une durée (TD1, TD2, TD3) d'accélération différente de la première période (T1, T2, T3, T4),
- dans lequel le dispositif (3) de commande numérique est agencé pour prescrire une accélération maximum de transition pour le premier axe (X) réglé en position,
- dans lequel le dispositif (3) de commande numérique est agencé pour déterminer, pour la premier axe (X) réglé en position, une vitesse ($V_{X,m3}$) maximum de transition, de manière à ce que, lors d'un mouvement du premier axe (X) réglé en position à la vitesse ($v_{X,m3}$) maximum de transition, en utilisant l'accélération maximum de transition, la vitesse du premier axe (X) réglé en position à la fin de la durée d'accélération ait la valeur zéro,
- dans lequel le dispositif (3) de commande numérique est agencé pour déterminer le mouvement de déplacement, de manière à ce que la vitesse ($v_X$) du premier axe (X) réglé en position ne dépasse pas la vitesse ($v_{X,m3}$) maximum de transition lors de la transition du premier tronçon (P1) de la trajectoire au deuxième tronçon (P2) de la trajectoire,
- **caractérisé en ce que**, au dispositif (3) de commande numérique, un cycle technologique ayant une deuxième période (TD1, TD2, TD3), différent du cycle d'interpolation peut être prescrit, et dans lequel la deuxième période (TD1, TD2, TD3) peut être établie comme durée d'accélération.

**12.** Système de machine pour effectuer un procédé suivant l'une des revendications 1 à 10, comprenant une machine (2), qui a une pluralité d'axes (X, Y, Z, B, C) réglés en position,

- dans lequel le système de machine comprend un dispositif (2) de commande numérique suivant la revendication 11,

qui est conçu (3)pour provoquer un mouvement de déplacement d'un premier élément de la machine par rapport à un deuxième élément de la machine.

FIG 1

# FIG 2

# FIG 3

# FIG 4

# FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60012815 T2
- EP 1424613 B1
- EP 2738635 A1

**In der Beschreibung aufgeführte Nicht-Patentliteratur**

- INTELLIGENTE LÖSUNGEN FÜR WERKZEUGMA-SCHINEN. Sinumerik Family Brochure DE. Sinumerik, 2021, 1-36
- Bahnsteuerbetrieb. SINUMERIK ONE Basisfunktionen. 01 July 2021, 1-874
- Geschwindigkeitsabsenkung gemäß Überlastfaktor. SINUMERIK ONE Basisfunktionen, 460